# EUROPÄISCHE PATENTSCHRIFT

(11) **EP 0 402 559 B1**
(45) Veröffentlichungstag und Bekanntmachung des Hinweises auf die Patenterteilung: **17.03.1993**
(21) Anmeldenummer: 90100078.6
(22) Anmeldetag: 03.01.1990
(51) Int. Cl.: B01D 35/12

(54) **Umschaltarmatur**
Diverter-valve
Vanne de distribution

(30) Priorität: 13.06.1989 DE 8907211 U
(43) Veröffentlichungstag der Anmeldung: 19.12.1990
(73) Patentinhaber: HYDAC FILTERTECHNIK GMBH, D-66280 Sulzbach (DE)
(72) Erfinder: Wilkendorf, Werner, D-6682 Ottweiler (DE)
(74) Vertreter: Patentanwälte Bartels und Partner

(56) Entgegenhaltungen:
- DE-A- 3 123 292
- DE-A- 3 313 539
- US-A- 3 618 781

## Beschreibung

Die Erfindung betrifft eine Umschaltarmatur für Flüssigkeiten, insbesondere für ein umschaltbares Doppelfilter für diese Flüssigkeiten, mit einem Armaturengehäuse, das mindestens eine Eintrittsöffnung und mindestens zwei Austrittsöffnungen für die Flüssigkeit aufweist, und mit einem Ventilkörper, der im Inneren des Gehäuses in verschiedene Stellungen bewegbar ist, in denen er die Eintrittsöffnung Wahlweise mit einer der austrittsöffnungen Verbindet.

Umschaltarmaturen dieser Art sind insbesondere dann erforderlich, wenn gewährleistet sein muß, daß eine in einer Vorrichtung besonders behandelte Flüssigkeit ununterbrochen einem Verbraucher zugeführt werden muß, auch wenn die Vorrichtung für die besondere Behandlung gelegentlich gewartet und für diese Wartung die Behandlung unterbrochen werden muß.

Zu diesem Zweck wird im Falle von zwei Austrittsöffnungen die erste und die zweite Austrittsöffnung über eine erste bzw. eine zweite Behandlungsvorrichtung mit dem Verbraucher verbunden. Zunächst wird dann die erste Austrittsöffnung der Armatur durch den Ventilkörper geschlossen, so daß die dazugehörige erste Behandlungsvorrichtung außer Betrieb ist und gewartet werden kann. Die zweite Behandlungsvorrichtung ist dann durch den Zufluß der Flüssigkeit durch die zweite Austrittsöffnung in Betrieb. Soll diese zweite Behandlungsvorrichtung für eine Wartung außer Betrieb gesetzt werden, dann wird der Ventilkörper zum Öffnen der ersten Austrittsöffnung von dieser und zum Schließen der zweiten Austrittsöffnung zu dieser bewegt. Während dieser Umschaltbewegung fließt die Flüssigkeit durch beide Behandlungsvorrichtungen und am Schluß der Umschaltbewegung nur noch durch die erste Behandlungsvorrichtung. Durch das Schließen der zweiten Austrittsöffnung ist die zweite Behandlungsvorrichtung außer Betrieb und kann nun ungestört gewartet werden.

Ein Anwendungsgebiet für Umschaltarmaturen dieser Art kennt z.B. die Filtertechnik. In sogenannten Doppelfiltern sind als Behandlungsvorrichtungen zwei Filter vorgesehen, die, wie oben beschrieben, mit den beiden Austrittsöffnungen der Umschaltarmatur und mit dem Verbraucher für z.B. gefiltertes Öl verbunden sind.

Ein anderes Anwendungsgebiet ist z.B. für die Kühlung eines Verbrauchers mit einer Flüssigkeit, z.B. im Durchlaufverfahren denkbar. Hierbei könnte die beim Kühlen im Verbraucher erwärmte Flüssigkeit einem Wärmetauscher zugeführt und dann dem Verbraucher zum Kühlen wieder zurückgeführt werden.

Ist es hierbei erforderlich, daß die Kühlung nicht unterbrochen wird, kann die zu kühlende Flüssigkeit über eine solche Umschaltarmatur abwechselnd über einen und zwei Wärmetauscher dem Verbraucher zugeführt werden.

Je nach der Menge der durch die Umschaltarmatur fließenden Flüssigkeit werden Umschaltarmaturen verschiedener Größe benötigt. Mit zunehmender Größe der Umschaltarmaturen wird für die Umschaltung immer mehr Kraft benötigt.

Durch die US-A 3 618 781 ist eine Umschaltarmatur für ein umschaltbares Doppelfilter dieser Art bekannt, bei der der Ventilkörper einen sich über den ganzen Querschnitt des Gehäusehohlraums erstreckenden Teil hat, mit dem er in einem um diesen Hohlraum zylindrisch umlaufenden Sitz drehbar gelagert ist. Der Ventilkörper bildet einen gekrümmten Verbindungskanal, der die Eintrittsöffnung mit der gewünschten Austrittsöffnung verbindet und dabei den Flüssigkeitsstrom um 90° umlenkt. Bei größeren Flüssigkeitsströmen muß der Ventilkörper entsprechend groß ausgebildet sein. Das hat nicht nur hohe Materialkosten zur Folge, sondern führt zu Reibungskräften, die beim Drehen des Ventilkörpers zum Umschalten von der einen Austrittsöffnung auf die andere überwunden werden müssen. Da durch die Umlenkung des Flüssigkeitsstromes zusätzliche Reibungskräfte entstehen, ist ein Hilfsventil zum Druckausgleich zwischen beiden Filtern vorgesehen. Durch dieses Hilfsventil wird jedoch nur die Erhöhung der Reibungskräfte durch die Umlenkung des Flüssigkeitsstromes verhindert. Die Reibungskräfte, die jedoch ohne Umlenkung des Flüssigkeitsstromes vorhanden sind, werden durch dieses Hilfsventil nicht beeinflußt

Der Erfindung liegt die Aufgabe zugrunde, eine Umschaltarmatur mit den eingangs genannten Merkmalen zu schaffen, die unabhängig von ihrer Größe leicht umgeschaltet werden kann.

Diese Aufgabe ist gemäß der Erfindung durch die im Anspruch 1 genannten Merkmale gelöst.

Dadurch, daß der Ventilkörper einen Verschlußdeckel für eine Austrittsöffnung aufweist und längs der Innenwand des Armaturengehäuses zum Verschließen mit der mit der Eintrittsöffnung nicht zu verbindenden Austrittsöffnung verschiebbar ist, kann der Ventilkörper nur eine räumliche Ausdehnung haben, die der räumlichen Ausdehnung einer Austrittsöffnung entspricht. Der Ventilkörper ist daher auch bei sehr großen Umschaltarmaturen mit einem Mindestaufwand an Material herstellbar. Ein weiterer Vorteil des Verschlußdeckels besteht darin, daß dieser aufgrund seiner minimalen räumlichen Ausdehnung vom Rand der Austrittsöffnung abgehoben und in diesem abgehobenen Zustand ohne Reibung im Armaturengehäuse bewegt werden kann.

Dadurch, daß ein Druckelement vorhanden ist, daß den Verschlußdeckel an die zu verschließende Öffnung drückt, wird trotz dieser Abhebemöglichkeit des Verschlußdeckels ein sicherer und dichter Abschluß der Austrittsöffnung erreicht.

Dadurch, daß eine Hubvorrichtung vorhanden ist, die auf den Verschlußdeckel einwirkt um die Kraft zu verringern oder aufzuheben, mit der der Verschlußdeckel an die Innenwand des Armaturengehäuses gedrückt wird, wird die Möglichkeit geschaffen, daß durch Betätigung dieser Hubvorrichtung die Reibungskraft zwischen Verschlußdeckel und Armaturengehäuse für eine handliche Bedienung auf ein beliebiges Maß verringert oder durch Abheben des Verschlußdeckels ganz aufgehoben werden kann. Um den Verschlußdeckel aus der einen Verschlußstellung in die andere Verschlußstellung zu verschieben, benötigt man lediglich eine entsprechende Schiebevorrichtung. Besonders einfache Verhältnisse ergeben sich hierbei, wenn die Innenwand des Armaturengehäuses zwischen den beiden Austrittsöffnungen entweder eben oder zylindrisch ist, da sich bei dieser Ausbildung der Innenwand besonders einfache Führungen für den Verschlußdeckel ergeben.

Als Hubvorrichtung kann jede beliebige bekannte Vorrichtung z. B. ein Elektromagnet, ein Elektromotor oder dergleichen verwendet werden. Bei einer vorteilhaften Ausführungsform der Erfingung ist als Hubvorrichtung ein Hubzylinder vorgesehen.

Zur Betätigung des Hubzylinders können gemäß einer vorteilhaften Ausführungsform der Erfindung, eine Druckmittelquelle und ein Ventil vorhanden sein, mittels dessen die Druckmittelquelle wahlweise mit einem der beiden vom Kolben des Hubzylinders voneinander getrennten Räumen desselben verbindbar ist.

Wird der von der Kolbenstange durchsetzte Raum des Hubzylinders mit der Druckmittelquelle verbunden, der Hubzylinder sich also als Ganzes zu verkürzen sucht. dann wirkt der Hubzylinder mit einer Kraft auf den Verschlußdeckel, die der Kraft entgegenwirkt, mit der der Verschlußdeckel von der Flüssigkeit im Armaturengehäuse und/oder von auf ihn wirkenden Federn an die Innenwand des Armaturengehäuses gedrückt wird. Hat dann der Verschlußdeckel die andere Verschlußstellung erreicht, dann wird der von der Kolbenstange nicht durchsetzte Raum des Hubzylinders mit der Druckmittelquelle des Hubzylinders verbunden, so daß sich dieser als Ganzes zu verlängern sucht und der Verschlußdeckel zur Herstellung eines dichten Verschlusses an die Innenwand der Schmutzkammer gedrückt wird.

Bei einer weiteren vorteilhaften Ausführung der Erfindung kann vorgesehen sein, daß zur Betätigung des Hubzylinders sein von der Kolbenstange durchsetzter Raum dauernd mit dem Innenraum des Gehäuses der Umschaltarmatur und sein anderer Raum über ein Ventil wahlweise mit dem Innenraum der Umschaltarmatur oder mit einem Abflußanschluß verbindbar ist.

Dadurch wird erreicht, daß beim Verbinden des von der Kolbenstange nicht durchsetzten Raumes des Hubzylinders mit einem Abflußanschluß der Flüssigkeitsdruck im Innenraum des Armaturengehäuses auf den Kolben mit einer Kraft einwirkt, die die Kraft verringert oder aufhebt mittels deren der Verschlußdeckel an die Innenwand des Armaturengehäuses gedrückt wird.

Ein besonders vorteilhafter Aufbau der Umschaltarmatur gemäß der Erfindung ergibt sich durch die Koinbination der folgenden Merkmale:
a) daß das Armaturengehäuse der Umschaltarmatur kreiszylindrisch ist,
b) daß der Verschlußdeckel eine der kreiszylindrischen Innenwand des Gehäuses angepaßte kreiszylindrische Verschlußfläche bildet,
c) daß eine zur Innenwand des Gehäuses koaxiale Schaltwelle vorhanden ist, die für ihre Betätigung mit einem Ende aus dem Armaturengehäuse herausgeführt ist,
d) daß der Verschlußdeckel radial bewegbar mit der Schaltwelle verbunden ist und
e) daß das vom Verschlußdeckel Abgekehrte Ende der Hubvorrichtung mit der Schaltwelle verbunden ist.

Bei der Anwendung dieser Merkmale für eine Umschaltarmatur für als Behandlungsvorrichtung dienende Filter ergibt sich ein vorteilhafter Aufbau dadurch, daß das Armaturengehäuse eine Schmutz- und eine Reinkammer aufweist, daß die Schmutzkammer mit einem Eintrittsstutzen für die zu filtrierende Flüssigkeit und die Reinkammer mit einem Austrittsstutzen für die filtrierte Flüssigkeit und beide Kammern mit Verbindungsstutzen versehen sind, die die Schmutz- und Reinkammer des Armaturengehäuses mit Schmutz- bzw. Reinkammern von zwei Filtergehäusen verbinden, und daß der Verschlußdeckel in seinen Verschlußstellungen wahlweise den Verbindungsstutzen der Schmutzkammer des Armaturengehäuses mit der Schmutzkammer eines der beiden Filtergehäuse verschließt.

Die Erfindung ist in der folgenden Beschreibung von in den Zeichnungen dargestellten Ausführungsbeispielen einer erfindungsgemäßen Umschaltarmatur für umschaltbare Doppelfilter im einzelnen erläutert.

Es zeigen:
Fig. 1 u. 2 teilweise im Schnitt dargestellte Seitenansichten eines umschaltbaren Doppelfilters, in denen das Ventil für die Verschlußstellung des Verschlußdeckels bzw. für die Umschaltstellung des Verschlußdeckels eingestellt ist,
Fig. 3 einen Schnitt nach der Linie III-III in Fig. 1,
Fig. 4 eine Draufsicht in Richtung des Pfeiles IV in Fig. 1;
Fig. 5 einen Schnitt nach der Linie V-V in Fig. 1,
Fig. 6 eine der Fig. 1 entsprechende Darstellung eines zweiten Ausführungsbeispieles.

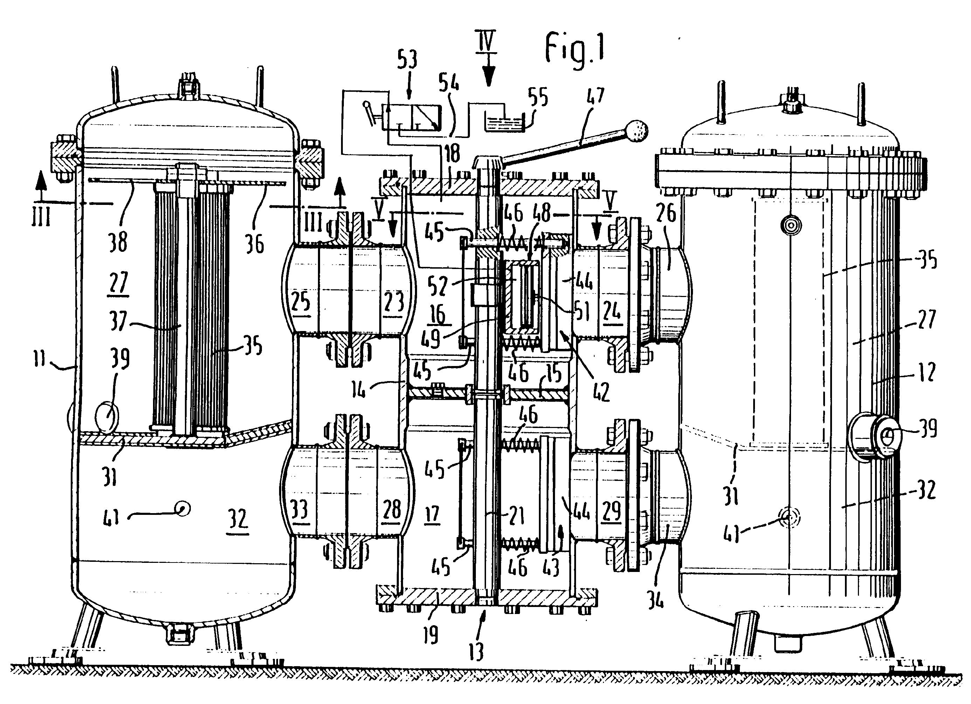

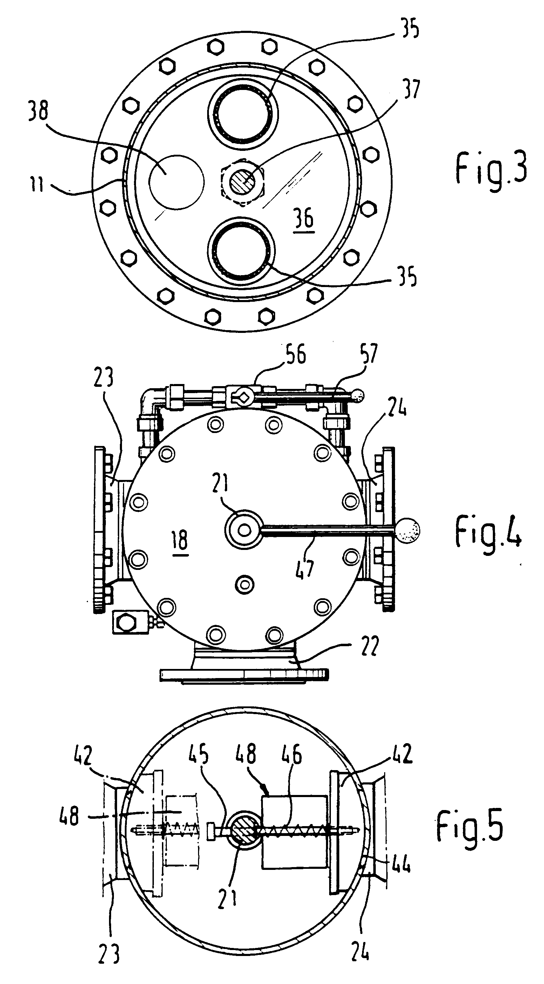

Das in den Figuren 1 - 5 dargestellte Ausführungsbeispiel eines umschaltbaren Doppelfilters weist zwei Filtergehäuse 11 und 12 auf, zwischen denen eine als Ganzes mit 13 bezeichnete Umschaltarmatur angeordnet ist. Das Gehäuse 14 der Umschaltarmatur 13 ist zylindrisch und mit seiner Achse vertikal angeordnet. Der Innenraum des Gehäuses 14 ist etwa in der Mitte durch eine Trennwand 15 in eine obere Schmutzkammer 16 und eine untere Reinkammer 17 unterteilt. Koaxial zum Gehäuse 14 ist im oberen und unteren Deckel 18 bzw. 19, sowie in der Trennwand 15 eine Schaltwelle 21 drehbar gelagert, deren Funktion im Folgenden noch näher erläutert wird.

Wie das aus Figur 4 ersichtlich ist, weist das Gehäuse 14 der Umschaltarmatur 13 einen in die Schmutzkammer 16 mündenden Eintrittsstutzen 22 für die zu filtrierende Flüssigkeit, z.B. Mineralöl oder dergleichen, sowie zwei ebenfalls in die Schmutzkammer des Gehäuses 14 mündende Verbindungsstutzen 23, 24 auf, die mit entsprechenden Stutzen 25 bzw. 26 durch eine Flanschverbindung verbindbar sind und die in Schmutzkammern 27 der Filtergehäuse 11 und 12 münden. Unterhalb der Verbindungsstutzen 23 und 24 sind in die Reinkammer 17 des Gehäuses 14 mündende Verbindungsstutzen 28 bzw. 29 vorgesehen, die in Figur 4 nicht sichtbar sind, weil sie von den Verbindungsstutzen 23 und 24 verdeckt sind. Ebenso wie die Verbindungsstutzen 28 und 29 unter den Verbindungsstutzen 23 bzw. 24 angeordnet sind, ist auch ein in die Reinkammer 17 des Gehäuses 14 mündender, in der Zeichnung nicht sichtbarer Austrittsstutzen für die filtrierte Flüssigkeit vorhanden.

Wie das aus Figur 1 ersichtlich ist, ist der Innenraum des Filtergehäuses 11 durch eine Trennwand 31 in die genannte Schmutzkammer 27 und eine darunter befindliche Reinkammer 32 unterteilt. In jede der beiden Reinkammern 32 der Filtergehäuse 11 und 12 mündet je ein Verbindungsstutzen 33 bzw. 34, der durch eine Flanschverbindung mit dem Verbindungsstutzen 28 bzw. 29 des Gehäuses 14 der Umschaltarmatur 13 verbunden ist.

In jeder der Trennwände 31 der Filtergehäuse 11 und 12 sind je mindestens zwei exzentrisch angeordnete Öffnungen für den Eingriff der Auslaufstutzen von handelsüblichen Filterelementen 35 vorgesehen, von denen in den Fig. 1, 2 und 6 nur je ein Filterelement 35 im linken Filtergehäuse 11 dargestellt ist. Das Filterelement 35 weist einen zylindrischen gelochten Blechmantel und ein diesen umfassendes sternförmig gefaltetes Filter aus einem geeigneten Filtermaterial, z.B. , aus Papier oder anorganischen Fasern, auf.
Um das Filterelement 35 in seinem Sitz in der Öffnung der Trennwand 31 zu halten, ist eine kreisförmige Haltescheibe 36 vorgesehen, die von einer zentralen Säule 37 gehalten ist, die mit ihrem unteren Ende an der Trennwand 31 befestigt ist. Für den Eingriff eines am oberen Ende des Filterelements 35 vorgesehenen, in der Zeichnung nicht sichtbaren Vorsprunges, sind in der Haltescheibe 36 exzentrisch um ihre Mitte angeordnete Aussparungen 38 vorgesehen. Da im dargestellten Aus führungsbeispiel nur zwei Filterelemente 35 verwendet werden, werden zwei dieser Aussparungen 38 benutzt. Jede der beiden Schmutzkammern 27 ist unmittelbar über der Trennwand 31 mit einer verschließbaren Abflußöffnung 39 für Reinigungszwecke versehen. In der Reinkammer 32 eines jeden Filtergehäuses 11 und 12 ist je eine ebenfalls verschließbare Öffnung 41 für den Anschluß eines Druckmessinstrumentes vorhanden.

Beim Filtrieren der durch den Eintrittsstutzen 22 in die Schmutzkammer 16 der Umschaltarmatur 13 zugeführten Flüssigkeit werden jeweils immer nur die Filterelemente 35 des einen Gehäuses 11 oder 12 benutzt. Bei der Darstellung in den Figuren 1, 2 und 5 sind die Mündungen der Anschlußstutzen 24 und 29 des Gehäuses 14 der Umschaltarmatur 13 durch in der Schmutzkammer 16 und in der Reinkammer 17 befindliche Verschlußdeckel 42 bzw. 43 verschlossen. Jeder dieser Verschlußdeckel 42 und 43 weist eine der kreiszylindrischen Innenwand des Gehäuses 14 angepaßte kreiszylindrische Verschlußfläche 44 auf und ist von zwei Haltestangen 45 gehalten, deren freie Enden miteinander verbunden sind. Die Haltestangen 45 sind in diametral durchgehenden Löchern der Schältwelle 21 längsverschiebbar gelagert. Zwischen der Schaltwelle 21 und den Verschlußdeckeln 42 und 43 ist auf jeder Haltestange 45 je eine Schraubendruckfeder 46 angeordnet. Diese Druckfedern 46 drücken die Verschlußdeckel 42 und 43 mit ihren Verschlußflächen 44 an die zylindrische Innenwand des Gehäuses 14 und verschließen dadurch die Mündung der Verbindungsstutzen 24 und 29. An dem oben aus dem Gehäuse 14 herausragenden Ende der Schaltwelle 21 ist ein Betätigungshebel 47 angeordnet, mit dem die Schaltwelle 21 in Figur 4 gegen den Uhrzeigersinn aus der in Figur 1 dargestellten Stellung um 180° gedreht werden kann, wobei dann die Verschlußdeckel 42 und 43 aus der in Figur 1 dargestellten Verschlußstellung in eine zweite Verschlußstellung verschoben werden, in der sie die Mündungen der Verbindungsstutzen 23 und 28 in die Schmutz- bzw. in die Reinkammer des Gehäuses 14 verschließen. Aus dieser zweiten Verschlußstellung kann dann die Schaltwelle 21 durch Drehen des Betätigungshebels 47 im Uhrzeigersinn wieder in die in Figur 1 dargestellte Verschlußstellung geschwenkt werden.

Bei entsprechender Größe der Umschaltarmatur und bei hohen Drücken der zu filtrierenden Flüssigkeit in der Schmutzkammer 16 ist die Reibungskraft zwischen dem Verschlußdeckel 42 und der Innenwand der Schmutzkammer 16 so groß, daß zum Drehen der Schaltwelle 21 der Hebel 47 allein nicht genügt, so daß dazu ein Schaltgetriebe erforderlich ist.

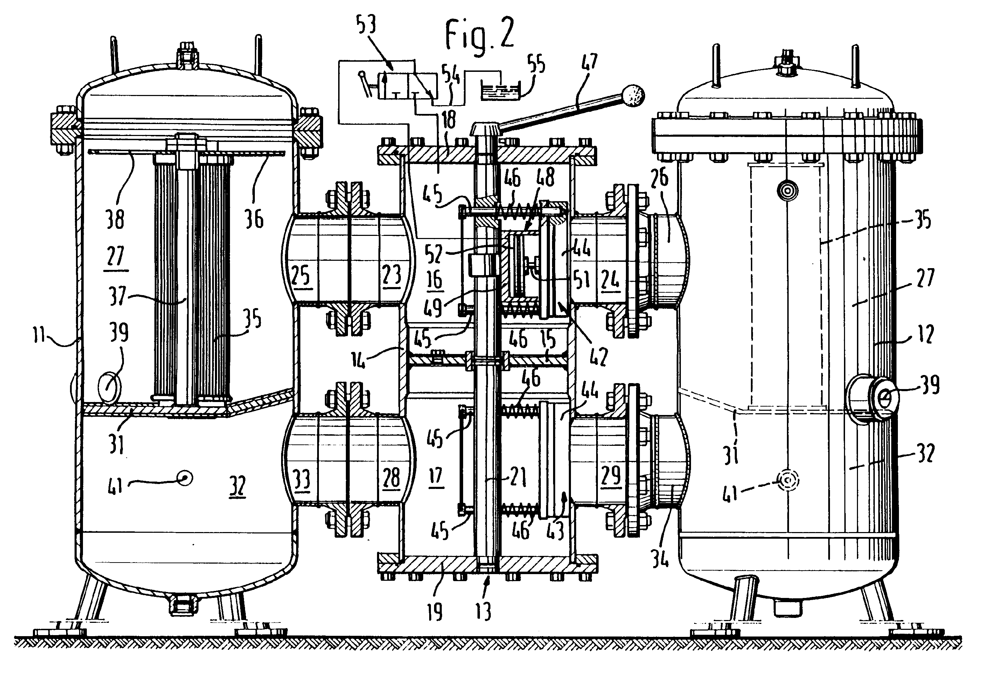

Um diese Reibungskraft zwischen der Verschlußfläche 44 des Verschlußdeckels 42 und der Innenwand der Schmutzkammer 16 zu verringern oder ganz aufzuheben, ist ein Hubzylinder 48 vorgesehen, dessen Zylinderkörper an einem Ende von einem Boden 49 verschlossen ist, der mit der Schaltwelle 21 um diese drehbar verbunden ist. Die Kolbenstange 51 des Hubzylinders 48 ist mit dem Verschlußdeckel 42 verbunden. Das dem Boden 49 abgekehrte Ende des Zylinderkörpers des Hubzylinders 48 ist zur Schmutzkammer 16 offen, so daß der in der Schmutzkammer 16 wirkende Druck auch in dem von der Kolbenstange durchsetzte Raum des Hubzylinders 48 herscht. Der andere, von der Kolbenstange 51 nicht durchsetzte Raum des Hubzylinders 48 ist über eine Leitung mit einem 3/2 Wegeventil 53 verbunden, das in der in Figur 1 dargestellten Betriebsstellung den Raum 52 mit der Schmutzkammer 16 verbindet, so daß der Hubzylinder 48 unwirksam ist und der Verschlußdeckel 42 durch die Federn 46 und die in der Schmutzkammer 16 befindliche zu filtrierende Flüssigkeit an die Innenwand des Gehäuses 14 in seine Verschlußstellung gedrückt wird. In der zweiten Stellung des 3/2 Wegeventiles 53 wird der Raum 52 des Hubzylinders 48 mit einem Abflußanschluß 54 verbunden über den das Druckmittel aus dem Raum 52 des Hubzylinders 48 in eine Wanne 55 abgeführt wird, so daß der Druck der Flüssigkeit in der Schmutzkammer 16 den Kolben des Hubzylinders 48 aus der in Figur 1 dargestellten Stellung nach links in die in Fig. 2 dargestellte Stellung drückt und dadurch auf den Verschlußdeckel 42 eine Kraft ausübt, die der Kraft der Federn 46 und der von der Flüssigkeit in der Schmutzkammer 16 auf den Verschlußdeckel 42 ausgeübten Kraft entgegen wirkt. Durch entsprechende Dimensionierung kann diese Kraft so groß gewählt werden, daß der Verschlußdeckel von der Innenwand etwas abgehoben wird, so daß dann das Umschalten leicht erfolgen kann.

Wie das aus Figur 4 ersichtlich ist, sind die beiden Verbindungsstutzen 23 und 24 des Gehäuses 14 über eine Druckausgleichsarmatur 56 miteinander verbunden, die mittels eines Betätigungshebels 57 aus der in Figur 4 dargestellten Sperrstellung, Zum Druckausgleich in den Schmutzkammern 27 der beiden Filtergehäuse 11 und 12, in eine Öffnungsstellung geschaltet werden kann.

Während des Filtrierens der durch den Eintrittsstutzen 22 zugeführten Flüssigkeit durch die Filterelemente 35 im Filtergehäuse 11 sind auch die beiden Kammern des Filtergehäuses 12 mit der Flüssigkeit gefüllt. Wenn durch Verschmutzen der Filterelemente 35 der Druck in der Schmutzkammer 27 des Filtergehäuses 11 über einen bestimmten Wert. z.B. 6 Bar ansteigt, wird dies durch ein Messgerät angezeigt. Dann wird die Umschaltarmatur in die zweite Verschlußstellung umgeschaltet, in der dann die zu filtrierende Flüssigkeit der Schmutzkammer des Filtergehäuses 12 zugeführt wird. Zu diesem Zweck wird zunächst die Druckausgleichsarmatur 56 geöffnet, um einen Druckausgleich zwischen der Schmutzkammer 16 des Gehäuses 14 der Umschaltarmatur 13 und der Schmutzkammer des Filtergehäuses 12 herzustellen. Da der Druck von z.B. 6 bar in der Schmutzkammer 27 des Filtergehäuses 11 durch die Verschmutzung der Filterelemente 35 verursacht wurde, herrscht in der Reinkammer 32 des Filtergehäuses 11 und damit auch in der Reinkammer 17 des Gehäuses 14 der Umschaltarmatur ein geringerer Druck von z.B. 4 bar. Das hat zur Folge, daß ein vollständiger Druckausgleich zwischen der Schmutzkammer 16 des Gehäuses 14 und der Schmutzkammer des Filtergehäuses 12 nicht eintreten kann, weil die im Filtergehäuse 12 befindlichen Filterelemente 35 noch rein sind und dadurch beim Durchströmen der Flüssigkeit in die Reinkammer 32 des Filtergehäuses 12 einen vernachlässigbaren kleinen Druckabfall verursachen. Der durch das Öffnen der Druckausgleichsarmatur 56 verursachte Druckanstieg in der Schmutzkammer 27 des Filtergehäuses 12 erreicht daher nur einen Wert der nur um soviel größer ist als der Druck in der Reinkammer des Gehäuses 14. daß der Druckanstieg ausreicht, um den Verschlußdeckel 43 der Reinkammer 17 von der Innenwand abzuheben. Dieser Druckanstieg führt im Filtergehäuse 12 zu einem Druck von z.B. 4,1 bar. Das bedeutet, daß der Verschlußdeckel 42 in der Schmutzkammer 16 des Gehäuses 14 immer noch nicht nur durch die Feder 46, sondern auch durch den Überdruck der Flüssigkeit in der Schmutzkammer 16 an die Innenwand des Gehäuses 14 gedrückt wird.

Wird nun das 3/2 Wegeventil in seine zweite in Figur 2 dargestellte Stellung umgeschaltet, dann wird der Raum 52 des Hubzylinders 48 mit der Wanne 55 verbunden, so daß der volle Druck in der Schmutzkammer 16 auf den Kolben des Hubzylinders 48 wirkt und bei entsprechender Dimensionierung des Hubzylinders den Verschlußdeckel 42 von der Innenwand des Gehäuses 14 leicht abhebt. Nunmehr kann die Schaltwelle 21 mittels des Betätigunshebel 47 leicht um 180° in eine Stellung gedreht werden, in der sich die Verschlußdeckel 42 und 43 in der diametral gegenüberliegenden Stellung befinden, in der sie die Mündungen der Verbindungsstutzen 23 und 28 in die Schmutzkammer 16 bzw. die Reinkammer 17 verschließen.

Während dieses Schaltvorganges fließt die zu filtrierende Flüssigkeit teilweise noch durch das Filtergehäuse 11 und in zunehmendem Maße durch das Filtergehäuse 12, bis schließlich der Fluß nur durch das Filtergehäuse 12 erfolgt. Das Filtrieren der Flüssigkeit wird also während dieses Umschaltvorganges nicht unterbrochen. Der Umschaltvorgang erfordert nur eine geringe Kraft, da der Verschlußdeckel 42 während des Umschaltvorganges von der Innenwand abgehoben ist.

Bei einer in der Zeichnung nicht dargestellten Abwandlung kann ein in der gleichen Weise ausgebildeter Hubzylinder auch für den Verschludeckel 44 in der Reinkammer 17 vorgesehen sein.

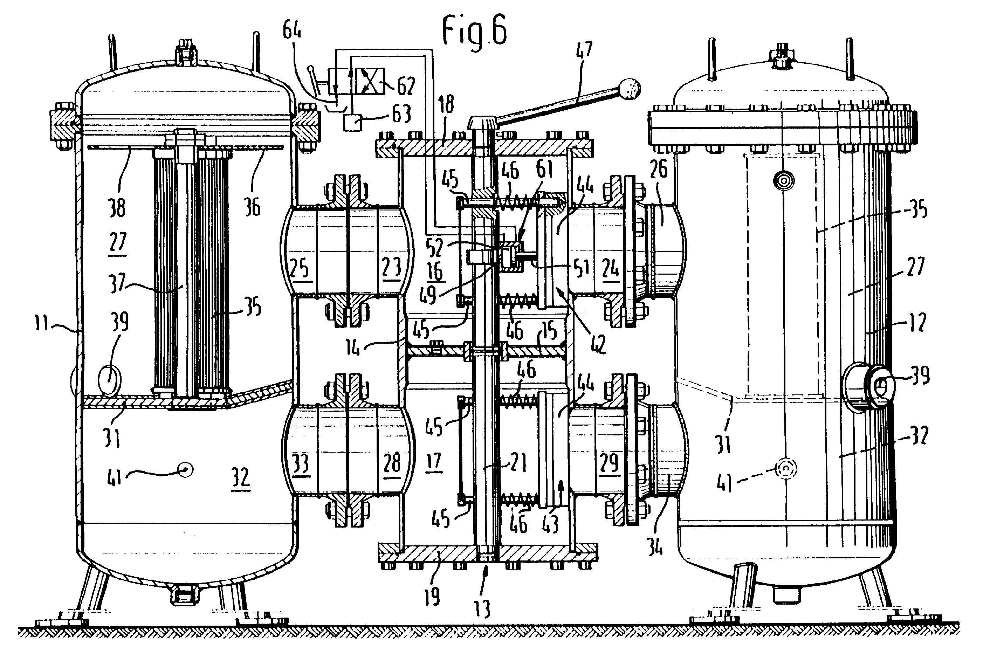

Das in Figur 6 dargestellte zweite Ausführungsbeispiel unterscheidet sich von dem oben beschriebenen ersten Ausführungsbeispiel dadurch, daß hier ein Hubzylinder 61 vorgesehen ist, dessen Zylinderkörper an seinen beiden Enden verschlossen ist und dessen beide Zylinderräume mit einem 4/2 Wegeventil 62 verbunden sind, mittels dessen der eine Zylinderraum des Hubzylinders 61mit einer externen Druckmittelquelle 63, z.B. mit dem Druckstutzen einer Druckmittelpumpe, und der andere mit einem Rückflußanschluß 64 z.B. mit einer Wanne oder dem Saugstutzen der Pumpe, und umgekehrt verbindbar sind. Auf diese Weise kann mittels der Engergie der Druckmittelquelle 63 der Verschlußdeckel 42 wahlweise an die Innenwand des Gehäuses 14 angedrückt oder von dieser abgehoben werden.

Auch hier kann bei einem abgewandelten Ausführungsbeispiel ein gleicher Hubzylinder 61 für den Verschlußdeckel 43 in der Reinkammer des Gehäuses 14 vorgesehen sein.

## Patentansprüche

1. Umschaltarmatur (13) für Flüssigkeiten, insbesondere für ein umschaltbares Doppelfilter für diese Flüssigkeiten,
- mit einem Armaturengehäuse (14), das mindestens eine Eintrittsöffnung und mindestens zwei Austrittsöffnungen für die Flüssigkeit aufweist, und
- mit einem Ventilkörper, der im Innern des Armaturengehäuses (14) in verschiedene Stellungen bewegbar ist, in denen er die Eintrittsöffnung wahlweise mit einer der Austrittsöffnungen verbindet,
dadurch gekennzeichnet,
- daß der Ventilkörper einen Verschlußdeckel (42) für eine Austrittsöffnung aufweist und längs der Innenwand des Armaturengehäuses (14) zum Verschließen der mit der Eintrittsöffnung nicht zu verbindenen Austrittsöffnung verschiebbar ist,
- daß ein Druckelement (46) vorhanden ist, das den Verschlußdeckel (42) an die zu verschließende Öffnung drückt und
- daß eine Hubvorrichtung (48;61) vorhanden ist, die auf den Verschlußdeckel (42) einwirkt, um die Kraft zu verringern oder aufzuheben, mit der der Verschlußdeckel (42) an die Innenwand des Armaturengehäuses (14) gedrückt wird.

2. Umschaltarmatur nach Anspruch 1 dadurch gekennzeichnet, daß als Druckelement mindestens eine Feder (46) vorhanden ist.

3. Umschaltarmatur nach Anspruch 1 oder 2 dadurch gekennzeichnet, daß als Hubvorrichtung ein Hubzylinder (48;61) vorgesehen ist.

4. Umschaltarmatur nach Anspruch 3, dadurch gekennzeichnet, daß zur Betätigung des Hubzylinders (61) eine Druckmittelquelle (63) und ein Ventil (62) vorhanden sind, mittels dessen die Druckmittelquelle (63) wahlweise mit einem der beiden vom Kolben des Hubzylinders (61) voneinander getrennten Räumen verbindbar ist.

5. Umschaltarmatur nach Anspruch 4, dadurch gekennzeichnet, daß als Ventil ein 4/2 Wegeventil (62) vorgesehen ist, mittels dessen der eine Zylinderraum des Hubzylinders (61) mit der Druckmittelquelle (63) und der andere mit dem Rückflußanschluß (64) und umgekehrt verbindbar sind.

6. Umschaltarmatur nach Anspruch 3, dadurch gekennzeichnet, daß für das Umschalten von unter Überdruck stehenden Flüssigkeiten zur Betätigung des Hubzylinders (48) sein von der Kolbenstange durchsetzter Raum dauernd mit dem Innenraum des Armaturengehäuses (14) und sein anderer Raum (52) über ein Ventil (53) wahlweise mit diesem Innenraum oder mit einem Abflußanschluß (54) verbindbar ist.

7. Umschaltarmatur nach einem der Ansprüche 1 bis 6, dadurch gekennzeichnet,
a) daß das Armaturengehäuse (14) der Umschaltarmatur (13) kreiszylindrisch ist,
b) daß der Verschlußdeckel (42) eine der kreiszylindrischen Innenwand des Armaturengehäuses (14) angepaßte kreiszylindrische Verschlußfläche (44) bildet,
c) daß eine zur Innenwand des Armaturengehäuses (14) koaxiale Schaltwelle (21) vorhanden ist, die für ihre Betätigung mit einem Ende aus dem Gehäuse (14) herausgeführt ist,
d) daß der Verschlußschieber (42) radial bewegbar mit der Schaltwelle (21) verbunden ist und
e) daß das vom Verschlußdeckel (42) abgekehrte Ende der Hubvorrichtung mit der Schaltwelle (21) verbunden ist.

8. Umschaltarmatur nach einem der Ansprüche 1 bis 7 für ein umschaltbares Doppelfilter, dadurch gekennzeichnet,
- daß das Armaturengehäuse (14) eine Schmutz- und eine Reinkammer (16 bzw. 17) aufweist,
- daß die Schmutzkammer (16) mit einem Eintrittsstutzen (22) für die zu filtrierende Flüssigkeit und die Reinkammer (17) mit einem Austrittsstutzen (22) für die filtrierte Flüssigkeit und beide Kammern mit Verbindungsstutzen (23,24 bzw. 28,29) versehen sind, die die Schmutz-und Reinkammer (16 bzw. 17) des Armaturengehäuses (14) mit Schmutz- bzw. Reinkammern (27 bzw. 32) von zwei Filtergehäusen (11,12) verbinden, und
- daß der Verschlußschieber (42) in seinen Verschlußstellungen wahlweise den Verbindungsstutzen (23 oder 24) der Schmutzkammer des Armaturengehäuses (14) mit der Schmutzkammer (27) eines der beiden Filtergehäuse (11 bzw. 12) verschließt.

9. Umschaltarmatur nach den Ansprüchen 7 und 8, dadurch gekennzeichnet,
- daß in der Reinkammer (17) ein Verschlußdeckel (43) zum wahlweisen Verschließen der beiden Stutzen (28 oder 29) vorhanden ist, die die Reinkammer (17) des Armaturengehäuses mit den Reinkammern (32) der beiden Filtergehäuse (11, 12) verbinden und
- daß der Verschlußdeckel (43) mit der Schaltwelle (21) verbunden ist.

10. Umschaltarmatur nach Anspruch 9, dadurch gekennzeichnet, daß zum Verringern der Reibungskraft des Verschlußdeckels (43) an der Innenwand der Reinkammer des Armaturengehäuses eine am Verschlußdeckel (43) angreifende Hubvorrichtung vorhanden ist.

## Claims

1. Switch-over valve (13) for liquids, in particular for a switch-over double filter for these liquids,
- with a valve housing (14), which comprises at least one inlet opening and at least two outlet openings for the liquid, and
- with a valve body, which inside the valve housing (14) can be moved into different positions, in which it connects the inlet opening optionally to one of the outlet openings,
characterised in that,
- the valve body comprises a cover (42) for one outlet opening and is able to slide along the inner wall of the valve housing (14) for closing the outlet opening not to be connected to the inlet opening,
- a pressing member (46) is provided, which presses the cover (42) against the opening to be closed and
- a lifting device (48; 61) is provided, which acts on the cover (42), in order to reduce or abolish the force by which the cover (42) is pressed against the inner wall of the valve housing (14).

2. Switch-over valve according to Claim 1, characterised in that at least one spring (46) is provided as the pressing member.

3. Switch-over valve according to Claim 1 or 2, characterised in that a lifting cylinder (48; 61) is provided as the lifting device.

4. Switch-over valve according to Claim 3, characterised in that provided for actuating the lifting cylinder (61) is a pressure medium source (63) and a valve (62), by means of which the pressure medium source (63) can be connected optionally to one of the two chambers separated from each other by the piston of the lifting cylinder (61).

5. Switch-over valve according to Claim 4, characterised in that provided as the valve is a 4/2 way directional control valve, by means of which the one cylinder chamber of the lifting cylinder (61) can be connected to the pressure medium source (63) and the other to the return connection (64) and vice versa.

6. Switch-over valve according to Claim 3, characterised in that for the switching-over of liquids, which are under high pressure, for actuating the lifting cylinder (48), its chamber through which the piston rod passes can be permanently connected to the interior of the valve housing (14) and its other chamber (52) can be connected by way of a valve (53) optionally to this interior or to a discharge connection (54).

7. Switch-over valve according to one of Claims 1 to 6, characterised in that
a) the valve housing (14) of the switch-over valve (13) is circular cylindrical,
b) the cover (42) forms a circular cylindrical closure surface (44) adapted to the circular cylindrical inner wall of the valve housing (14),
c) a control shaft (21) coaxial with the inner wall of the valve housing (14) is provided, which shaft, for its actuation, is guided by one end out of the housing (14),
d) the cover (42) is connected in a radially movable manner to the control shaft (21), and
e) the end of the lifting device remote from the cover (42) is connected to the control shaft (21).

8. Switch-over valve according to one of Claims 1 to 7 for a switch-over double filter, characterized in that,
- the valve housing (14) comprises a dirty chamber and a clean chamber (16, 17),
- the dirty chamber (16) is provided with an inlet connection (22) for the liquid to be filtered and the clean chamber (17) is provided with an outlet connection (22) for the filtered liquid and both chambers are provided with connections (23, 24) or (28, 29), which connect the dirty and clean chamber (16 or 17) of the valve housing (14) to dirty or clean chamber (27, 32) of two filter housings (11, 12), and
- in its closed position, the cover (42) optionally closes the connection (23 or 24) of the dirty chamber of the valve housing (14) to the dirty chamber (27) of one of two filter housings (11 or 12).

9. Switch-over valve according to Claims 7 and 8, characterised in that provided in the clean chamber (17) is a cover (43) for optionally closing the two connections (28 or 29), which connect the clean chamber (17) of the valve housing to the clean chambers (32) of the two filter housings (11, 12), and
- the cover (43) is connected to the control shaft (21).

10. Switch-over valve according to Claim 9, characterised in that a lifting device acting on the cover (43) is provided for reducing the frictional force of the cover (43) on the inner wall of the clean chamber of the valve housing.

## Revendications

1. Appareil de commutation ou d'inversion (13) pour liquides, notamment pour filtres jumelés réversibles pour lesdits fluides qui comprend :
une enveloppe (14) qui présente, au moins, une ouverture d'entrée et, au moins, deux ouvertures de sortie,
un corps de valve logé à l'intérieur de l'enveloppe (14) et qui peut être déplacé dans plusieurs positions dans lesquelles il fait communiquer, sélectivement, l'ouverture d'entrée avec l'une des ouvertures de sortie, caractérisé en ce que :
le corps de valve comporte un couvercle (42) pour fermer une ouverture de sortie et qui peut se déplacer le long de la paroi intérieure de l'enveloppe (14) obturer l'ouverture de sortie ne devant pas être mise en communication avec l'ouverture d'entrée,
qu'il comprend un élément de pression (46) qui presse le couvercle (42) contre l'ouverture devant être fermée, et
par un dispositif agissant sur le couvercle (42) de façon à diminuer ou à annuler la force avec laquelle le couvercle (42) est pressé contre la paroi intérieure de l'enveloppe (14) de l'appareil.

2. Appareil selon la revendication 1, caractérisé en ce que l'élément de pression est constitué par, au moins, un ressort (46).

3. Appareil de commutation selon la revendication 1 ou 2, caractérisé en ce que le dispositif d'élévation comprend un cylindre (48, 61).

4. Appareil de commutation selon la revendication 3, caractérisé en ce que l'actionnement du cylindre (61) est assuré par un cylindre de levage (61) est assuré par une source de fluide sous pression (63) et par une valve (62), au moyen desquels la source de fluide sous pression (63) peut être sélectivement mise en communication avec ou isolé du piston du cylindre de levage (61).

5. Appareil de commutation selon la revendication 4, caractérisé en ce qu'il comprend une valve 4/2 voies (62) permettant de faire communiquer l'une des chambres du cylindre de levage (61) avec la source de fluide sous pression (63) et l'autre avec le raccord d'évacuation (64) et inversement.

6. Appareil de commutation selon la revendication 3, caractérisé en ce que pour pouvoir commuter des fluides sous pression afin d'actionner le cylindre de levage (48) sa chambre, traversée par la tige de piston communique en permanence avec la chambre intérieure de l'enveloppe (14), tandis que son autre chambre (52) peut être reliée sélectivement par une valve (53) avec cette chambre intérieure ou avec un raccord d'évacuation (54).

7. Appareil de commutation selon l'une des revendications 1 à 6, caractérisé en ce que :
a) l'enveloppe (14) de l'appareil de commutation (13) a la forme d'un cylindre circulaire;
b) l'élément de fermeture (42) forme une surface d'obturation cylindrique circulaire (44) adaptée à la paroi intérieure de même forme que l'enveloppe (14).
c) qu'un arbre de commutation (21) coaxial à l'enveloppe (14) dont l'une des extrémités s'avance à l'extérieur de l'enveloppe (14) est prévu aux fins d'actionnement.
d) en ce que l'obturateur coulissant (42) est relié radialement mobile avec l'arbre de commutation (21), et
en ce que l'extrémité orientée à l'opposé de l'élément de fermeture (42) est reliée à l'arbre de commutation (21).

8. Appareil de commutation selon l'une quelconque des revendications 1 à 7, pour un double filtre commutable, caractérisé en ce que l'enveloppe de l'appareil comporte une chambre à impuretés et une chambre propre (16 - 17);
en ce que la chambre à impuretés (16) est pourvue d'un conduit (22) pour l'entrée du liquide devant être filtré, tandis que la chambre propre (17) est pourvue d'un conduit (22) pour évacuer le liquide filtré, ces deux chambres étant également pourvues de conduits de liaison (23, 24 et 28, 29) qui relient respectivement les chambres à impuretés et propre (13 et 17) de l'enveloppe (14) avec les chambres impure et propre (27 et 32) de deux enveloppes de filtres (11, 12), et,
en ce que dans ses positions actives, l'élément de fermeture (42) clôt sélectivement le conduit (23 ou 24) reliant la chambre à impuretés de l'enveloppe (14) avec la chambre à impuretés (27) des deux enveloppes de filtres (11 et 12).

9. Appareil de commutation selon les revendications 7 et 8, caractérisé en ce que la chambre propre (17) comporte un couvercle (43) pour fermer sélectivement l'un des deux raccords (28 ou 29) qui relient la chambre propre (17) de l'enveloppe de l'appareil avec les chambres propres (32) des deux enveloppes (11, 12) des filtres; et
en ce que le couvercle de fermeture (43) est relié à l'arbre de commutation (21).

10. Appareil de commutation selon la revendication 9, caractérisé en ce que, pour diminuer la résistance de friction du couvercle (43) contre la paroi intérieure de la chambre propre de l'enveloppe, un dispositif de levage s'appliquant contre le couvercle (43) est prévu.
